# EUROPÄISCHE PATENTSCHRIFT

(11) **EP 1 759 430 B1**
(45) Veröffentlichungstag und Bekanntmachung des Hinweises auf die Patenterteilung: **22.06.2011**
(21) Anmeldenummer: 03772293.1
(22) Anmeldetag: 03.11.2003
(51) Int. Cl.: H01M 4/00, H01M 4/04, H01M 4/48, H01M 4/58, H01M 4/62

(54) **LITHIUM-POLYMER-ENERGIESPEICHER UND VERFAHREN ZU IHRER HERSTELLUN**
LITHIUM POLYMER ENERGY STORAGE DEVICES AND METHOD FOR THE PRODUCTION THEREOF
ACCUMULATEUR D'ENERGIE LITHIUM-POLYMERE ET PROCEDE POUR LE PRODUIRE

(30) Priorität: 04.11.2002 DE 10251194
(43) Veröffentlichungstag der Anmeldung: 07.03.2007
(73) Patentinhaber: Dilo Trading AG, 6300 Zug (CH)
(72) Erfinder: NAARMANN, Herbert, 67227 Frankenthal (DE); KRUGER, Franz, Josef, 65817 Eppstein (DE)
(74) Vertreter: TBK
(86) Internationale Anmeldenummer: PCT/EP2003/012239
(87) Internationale Veröffentlichungsnummer: WO 2004/042849

(56) Entgegenhaltungen:
- EP-A- 0 867 267
- WO-A-01/17052
- DE-A- 10 118 639
- DE-A- 19 713 072
- US-A1- 2001 021 473
- US-A1- 2002 110 735
- US-A1- 2002 136 948
- US-B1- 6 409 867
- PATENT ABSTRACTS OF JAPAN Bd. 2000, Nr. 15, 6. April 2001 (2001-04-06) & JP 2000 348712 A (JAPAN ENERGY CORP), 15. Dezember 2000 (2000-12-15)

## Beschreibung

Die Erfindung bezieht sich auf ein Verfahren zur Herstellung von Lithium-Polymer-Energiespeichern durch ein neues Extrusionsverfahren und so hergestellte Lithium-Polymer-Energiespeicher.

Lithium-Polymer-Energiespeicher sind Li-Polymer-Batterien, die nach einem speziellen Verfahren und neuen Konzepten sowie mit neuen Komponenten hergestellt werden. Lithium-Polymer Batterien bestehen aus Anode, Kathode und einem Polymerelektrolyten als Separator.

Anode, Kathode und Separator werden zusammengeführt, so daß ein Verbund entsteht, bei dem der Separator als Zwischenlage für Anode/Kathode dient. Der erhaltene Verbund wird dann zu Mehrfachlagen verarbeitet und zu prismatischen bzw. Wickelzellen verarbeitet. Nach dem Einhausen und Polen liegt eine Lithium-Polymer Batterie vor, die nach dem Formieren betriebsbereit ist mit Spannung von ca. 4 Volt und Zyklenzeiten > 300.

Einzelheiten zur Herstellung und zum System sind literaturbekannt und dem "Handbook of Battery Materials" edit. I.0. Besenhard, Verlag VCH, Weinheim, zu entnehmen (Dokument 1). Spezielle Herstellungsverfahren, wie z. B. den sog. Bellcore-Prozess sind beschrieben in "Lithium Ion Batteries" edit M. Wakihara et O. Yamamoto, Verlag VCH, Weinheim 1998 S. 235 u. Fig. 10.9 (Dokument 2).

Zur Herstellung der Lithium-Polymer.Batterie werden grundsätzlich verschiedene Prozesse verwendet. Eine Variante ist der Beschichtungsprozess, bei dem (die) der für die Kathoden- bzw. Anodenmasse erforderliche Polymerbinder gelöst wird (z. B. ca. 5-10%ig Fluorelastomere Homo oder Copolymere in z. B. N-Methyl-Pyrrolidon (NMP) und diese Polymerlösung mit den kathoden- bzw. anodenspezifischen Zusätzen wie Li-interkalierbare Metalloxide bzw. Li-interkalierbare Kohlenstoffe (Ruß, Graphit o.ä.) versetzt und dispergiert wird und dann diese Dispersion entsprechend der Filmbeschichtungstechnik auf Stromkollektoren (Folien, Bändern, Netzen o.ä. - Cu vorzugsweise für die Anode, AI vorzugsweise für die Kathode) aufgetragen wird.

Eine Variante (1a) der oben beschriebenen Beschichtungstechnik besteht in der Verwendung von wässrigen Polymerdispersionen anstelle der Polymerlösungen mit organischen Lösungsmitteln. Die nach 1 bzw. 1a erhaltenen Beschichtungen werden nach dem Trocknen (gewickelt) zu prismatischen oder Wickelzellen verarbeitet, wobei als Zwischenlage ein sog. Separator z. B. aus Cellgard o.ä. mit porösen Strukturen verwendet wird, ein derart hergestelltes System wird eingehaust und vor dem Verschließen mit (Elektrolyt) Leitsalzlösung (d. h. Leitsalz gelöst in aprotischen Lösungsmitteln) gefüllt. (z. B. durch Anlegen von Vakuum).

Der Bellcore-Prozess (1 b) ist eine weitere Variante der Beschichtungstechnik, hier würde schon in die Anoden- bzw. Kathodenmasse eine Komponente (Dibutylphthalat DBP z.B.) mit eingearbeitet, die vor der Zusammenführung von Anode/Kathode/Separator im sog. Bellcore-Prozess (vgl. Dokument 2) herausgelöst wird, um ausreichende Porosität d. h. Aufnahmevermögen für die Leitsalzlösung (Elektrolyt) zu schaffen.

Ein grundsätzlich anderer Prozeß (2) ist die Extrusion z. B. vom Separator (Polymer-Gelelektrolyt) und z. B. einer Kathode (US-Patent 4,818,643; entspricht EP 0 145 498 B1 und DE 3485832T) bzw. die Extrusion von Anode, Separator und Kathode in parallel geschalteten Extrudern und nachfolgendem Zusammenführen (DE 100 20 031 A1). Die letztere Patentanmeldung offenbart ein Verfahren, in dem jeweils trägerlösungsmittelfreie Anodenmasse, Separator (Polymer-GelElektrolyt) und Kathodenmasse in parallel geschalteten Extrudern extrudiert und anschließend als eine Einheit zusammengeführt werden, die mit Kollektorfolien laminiert wird.

Die bislang beschriebenen Verfahren haben allesamt, wenn auch unterschiedliche Nachteile: Bei den Beschichtungsprozessen (1 - 1a) muß in allen Fällen das organische Lösungsmittel bzw. das Wasser (eingeschleppt durch die Polymerlösung bzw. Dispersion) beseitigt werden. Verbleibendes Lösungsmittel führt zum "Fading", d. h. Nachlassen der Batterie-Effizienz und mangelndes Zyklenstabilität, das organische Lösungsmittel muß aus Kostengründen und zum Umweltschutz entfernt werden, das bedeutet hohe Trocknungstemperaturen bzw. beim kontinuierlichen Prozeß längere Trocknungszeiten bei niederen Trocknungstemperaturen und Vakuum, analoges gilt für die Abtrennung von Wasser: Nachteile entstehen im Film: Inhomogenitäten, Rißbildung beim engen Wickeln, verminderte Haftung auf den Stromkollektoren, Schädigung der Stromkollektoren, Unterwanderung des Films durch den Elektrolyten, u. ä.. Bei der Befüllung mit dem Elektrolyten erfolgt nur mangelnde Benetzung der Anoden- bzw. Kathodenmasse.

Beim Prozeß 1b ist die Porosität zur Aufnahme des Elektrolyten gegeben, jedoch gelten alle anderen bei 1 -1a genannten Nachteile auch für 1b.

Bei dem Extruderprozess wird u. a. Polyethylenoxid (PEO) verwendet (US-Patent Nr. 4,818,643), das jedoch beim Batteriebetrieb keine Langzeitstabilität aufweist, d. h. Zyklenstabilität < 100. Der andere Extruderprozess arbeitet mit Elektrolyten auf Basis von EC/γ-BL (d. h. Ethylencarbonat, γ-Butyrolacton) mit LiClO₄ als Leitsalz, auch dieses System zeigt geringe Zyklenstabilität < 100 (siehe z.B. DE 100 20 031 A1), da unter den Betriebsbedingungen der Batterie das γ-BL reagiert und störende Nebenprodukte liefert: Auch das beanspruchte Polymer PMM (Polymethylmethacrylat) ist nicht stabil und führt zu störenden Nebenreaktionen. Die in den Beispielen genannten Rezepturen für Anode, Kathode und Separator (Polymer-Gelelektrolyt) und das im Dokument (1) zitierte Verfahren führen zu keiner funktionstüchtigen Batterie mit offenbarten Daten.

Der Erfindung liegt somit die Aufgabe zugrunde, ein Verfahren zur Herstellung eines Lithium-Polymer-Energiespeichers bereitzustellen, mit dem die vorstehenden Probleme gelöst werden, insbesondere deutlich vermindertes Fading zu beobachten ist und der Energiespeicher erhöhte Zyklenstabilität aufweist.

Diese Aufgabe wird mit dem erfindungsgemäßen Verfahren gemäß Patentanspruch 1 gelöst. Bevorzugte Ausführungsformen sind in den Unteransprüchen definiert.

Die vorliegende Erfindung vermeidet die Nachteile der bekannten Verfahren durch ein neues Verfahrenskonzept mit neuen Komponenten. Elektrodenmassen mit der Zwischenschicht des isolierenden Separators und der jeweiligen irreversiblen Anbindung an die Stromkollektoren mit der nachfolgenden Einhausung und Polung zum Plus- bzw. Minus-Pol der Batterie sind ein außerordentlich komplexes System. Hier entscheidet die Anordnung und Zuordnung der Komponenten über die Qualität des Li-Polymer-Systems. Nach den bekannten Verfahren liegen die jeweiligen Komponenten der Elektrodenmassen - gegebenenfalls auch des Separators - nur nach dem Zufallsprinzip, statistisch verteilt vor.

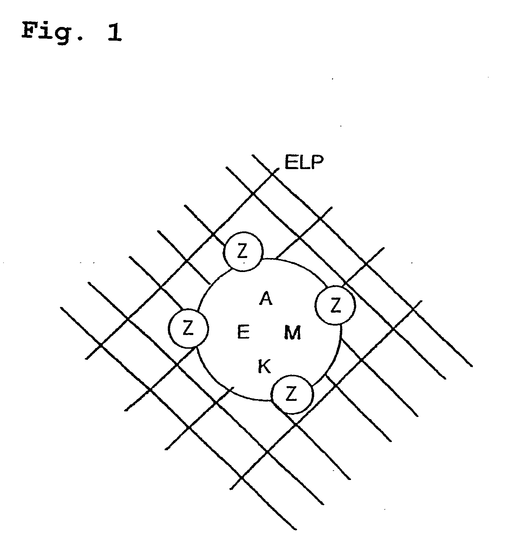

Nach dem erfindungsgemäßen Verfahren erfolgt eine gezielte Zu- und Anordnung der Komponenten mit optimierter Wirksamkeit. In Fig. 1 ist die Anordnung schematisch wiedergegeben.

Die gezielte Zu- und Anordnung der Elektrodenmassenkomponenten erfolgt dabei erfindungsgemäß in drei hintereinander geschalteten Prozessstufen. Die erste Prozessstufe besteht in der innigen Kombination bzw. dem Vermischen von aktiver Elektrodenmasse mit dem oder den Leitsalz(en) und einem oder mehreren Lösungsmitteln, vorzugsweise einem aprotischen Lösungsmittel. Hierbei werden die Komponenten innig vermischt, so dass die Leitsalzkomponente die aktive Komponente der Elektrodenmasse direkt kontaktiert. Gegebenenfalls kann in diesem Vermischungsschritt auch ein Leitsalzadditiv mit vermischt werden. Gemäß einer besonders bevorzugten Ausführungsform wird die Mischung aus Leitsalz und aktiver Elektrodenmasse nach der vorstehenden innigen Kontaktierung mit einem aprotischen Lösungsmittel imprägniert bzw. getränkt. Dies sorgt für die tiefe Durchdringung und Kontaktierung der aktiven Komponenten.

Anschließend wird in einer zweiten Prozessstufe die erhaltene Mischung mit einem Polymerbinder innig vermischt. Dies sorgt für ein Einbetten der Komponenten der aktiven Elektrodenmasse sowie der Zusätze in die Polymermatrix, insbesondere der des elektrisch leitfähigen Polymers. Dies ist graphisch in Fig. 1 dargestellt.

Es schließt sich dann erfindungsgemäß eine dritte Prozessstufe an, bei der der gesamte Verbund extrudiert und separat auf das Ableitermaterial laminiert wird und die laminierten Elektrodenmassen gegebenenfalls mit laminiertem Separator in Sandwich-Lage zusammengefügt werden. Die so erhaltenen aktiven Elektrodenmassen weisen eine gezielte Zu- bzw. Anordnung auf, sind somit strukturell genauer definiert als dies nach dem Stand der Technik möglich war und erreichen damit eine erhöhte Effizienz und Stabilität.

In Fig. 1 ist die gezielte Zu- und Anordnung der Komponenten für die Kathoden- bzw. Anodenmasse graphisch dargestellt. Dabei bedeutet AEKM Aktivkomponente der Elektrodenmasse, ELP die Matrix des elektrisch leitfähigen Polymers und Z sind Zusätze, z. B. Leitsalz plus Lösungsmittel (Elektrolyt und/oder anorganische Hilfsstoffe).

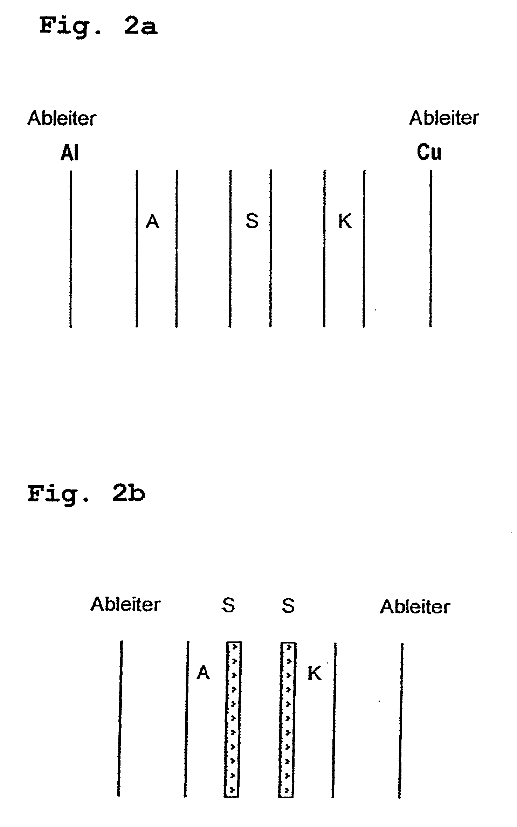

In Fig. 2a ist eine Ausführungsform des erfindungsgemäß erhaltenen Li-Polymerenergiespeichers dargestellt. Dabei ist der Separator (S) als separate Zwischenschicht in Sandwich-Lage zwischen der Anode (A) und der Kathode (K) angeordnet. Als äußerste Schichten sind die Ableiter dargestellt. Anodenseitig ist dabei ein Al-Ableiter und kathodenseitig ein Cu-Ableiter dargestellt.

Eine weitere bevorzugte Ausführungsform des Aufbaus für den erfindungsgemäß erhaltenen Li-Polymerenergiespeicher ist in Fig. 2b dargestellt. Dabei ist der Separator (S) integrierter Bestandteil der Kathode (K) bzw. der Anode (A).

Die Aktivkomponente der Elektrodenmasse: EM (AKEM) kann von dem System Leitsalz (LS) + Lösungsmittel (LM) - dargestellt durch Z benetzt und durchtränkt werden und ist in ein Netz (Gewebe) aus elektrisch leitfähige Polymeren (ELP) eingebettet. ELP können intrinsisch leitfähige Polymere wie Polyacetylen, Polypyrrol oder ähnliches, aber auch durch elektrisch leitfähige Zusätze, z. B. Ruß, Sn oder ähnliches leitfähig gemachte Polymerbinder sein.

Aktiv-Komponente der Elektrodenmasse:
Für die Anode:
   Graphit natürlich, gemahlen, ungemahlen, modifiziert. Graphit synth., Mesophasen, Microbeds, Graphene, Polyphenylene,
   Polyacetylene: allesamt C-Materialien, die mit Li-Interkalate bilden können.
Für die Kathode:
   Ni, Co, Cr, Mo, Mn, Ti, Zr-Oxide, die mit Li-Interkalate bilden können. Entsprechend Fig. 1 können die Aktiv-Komponenten der Elektrodenmassen mit Leitsalz (LS), Leitsalzadditiven (LSA) und/oder Lösungsmitteln benetzt bzw. durchtränkt werden, z. B. durch intensives Mahlen oder Rühren, gegebenenfalls bei erhöhten Temperaturen - vorzugsweise bis zu 100 °C.

Als Leitsalze (LS) kommen in Frage: (vgl. Dokument 1) LiPF₆, LiCF₃SO₃, Li [N (SO₂CF₃)₂], Li[C(SO₂CF₃)₃], LiOB (Li-oxalatoborat) bzw. andere Li-Organoborate u. ä.

Leitsalzadditive (LSA) sind: Organische Salze der oben angeführten LS bei denen Li durch einen organischen Rest z. B. Imidazolyl⁺ ersetzt ist, ferner Li-acetylacetonat, Li-metaborat, Li-Silikate auch natürliche wie Spodumen, Petalit, Lepidolith, Kryolithionit, ferner Kohlenstofffasern oder -pulver, die mit Li-Salzen (LS) getränkt bzw. ummantelt sind, ferner MgO, BaO, Al₂O₃ O.ä., die als Säurefänger oder Wasseradsorber wirken.

Erfindungsgemäße Lösungsmittel sind solche die in Dokument (1) erwähnt sind, insbesondere:
Carbonate: Diethylcarbonat (DEC), Dimethylcarbonat (DMC), Ethylethylcarbonat, (EMC), Ethylencarbonat (EC), Propylencarbonat (PC) u.ä..
Glykolether: Dimethoxyethan, (DME) und homologe Oxazolidinone: 3-Methyl 2-Oxy-3Me 20 X u. analoge Fluorether, insbesondere niedermolekulare Verbindungen mit Molmassen bis zu 1500 und Fluoralkylmethacrylsäureester.
Präparation der Aktiv-Komponente der Elektrodenmasse:
   Die Verarbeitung erfolgt vorzugsweise unter Ausschluß von Luft (Sauerstoff und auch Stickstoff), als Schutzgas wird Argon bevorzugt.

Zweckmäßig werden die Aktivkomponenten im Vakuum bei Temperaturen von 0 - 200 °C, vorzugsweise von RT bis 100 °C entgast, bei Drücken von beispielsweise 20 bis 10-4 Torr, vorzugsweise bei 2 bis 10⁻² Torr, bevor sie mit LS, LSA bzw. LM kontaktiert werden.

Zur intensiven Durchmischung dienen übliche Mahl-, bzw. Mischwerkzeuge aber auch Ultraschallgeräte.
(Lit. Ullmann's Encyclopedia of Industhal Chemistry, B. 2, 5-1 bis 5-38, 7-1 bis 7-36, 24-1, 25-1 bis 25-31 bis 27-16 [1988], VCH Weinheim).

Modifizierungen können durch Reaktion mit Li-Alkylen durchgeführt werden. Einzelheiten zur Darstellung der aktiven Komponenten der Elektrodenmassen (AKEM) werden in den Beispielen mitgeteilt.

### Polymerbinder:

Wie in Fig. 1 dargestellt, sind die Polymerbinder bevorzugt, Netzwerke (Gewebe) o. ä., die vorzugsweise elektrisch leitfähig sein sollten (ELP) und LS, LSA, LM als Zusätze (=Z) inkorporiert enthalten können oder eine Ummantelung aus LS, LSA gegebenenfalls in Kombination mit LM (dem Lösungsmittel) besitzen können.

Die Polymerbinder (PB) können insbesondere Polymere mit Molmassen von 20 000 bis 2 Millionen, vorzugsweise von 30 000 bis 500 000 sein.

In Frage kommen bevorzugt Polyolefine, Polyethylen, Polypropylen, Polybutene sowie deren Copolymere, vorzugsweise mit Olefinen oder Acryl-/Methacrylsäureestern mit Alkylestergruppen mit mehr als 3 Kohlenstoffatomen, ferner Polyvinylether, sowie Polystyrol und Copolymere mit Butadien bzw. Isopren, vorzugsweise Blockcopolymere, die anionisch hergestellt werden, außerdem Kautschuk z. B. Butylkautschuk und/oder SB-Rubber bzw. Polydiene (hergestellt mit Ziegler/Natta Katalysatoren: Lit.: H.G. Elias Makromoleküle Bd. 2, S. 141 [1992] Verlag Hüthig u. Wepf - Basel), ferner Fluorelastomere, vorzugsweise Co- bzw. Terpolymere auf Basis von PVDF, HFP, TFE und/oder Perfluoralkoxyderivate (Lit. Ullmann's Encyclopedia of Industrial Chemistry Vol A 11, p 402 - 427, Verlag VCH - Weinheim 1988). Außerdem kommen Polyether, hergestellt aus Ethylen-, Propen-, Butenoxid als Homo- und/oder Copolymer, vorzugsweise mit verkappten Endgruppen - in Frage, auch Polyvinylpyrrolidon und Copolymere z. B. Vinylimidazol oder Methacrylsäureestern oder Vinylcaprolactam sind verwendbar.

Nach dem erfindungsgemäßen Verfahren werden die oben aufgeführten Polymerbinder (PB) als elektrisch leitfähige Polymere (ELP) in das Li-Batterie-System eingeführt und sind dort aktiv.

Die Herstellung der erfindungsgemäßen ELP kann typischerweise durch Inkorporieren oder Ummanteln mit LS, LSA und LM erfolgen. Beispielsweise wird ein PB (Styroflex®: Styrol/Butadien/Styrol-Dreiblockpolymerisat) mit 20 Gew.-% Kohlenstofffasern (Lit. Ullmann's Encyclopedia of Industrial Chemistry, Vol. A 11, S. 42-64) gefüllt und dann mit einer Beschichtung aus Polyvinylpyrrolidon (Luviskol)® plus LiOB/Dimethoxyethan gecoated und als Matrix für die aktive Anoden- bzw. Kathodenmasse verwendet. Analog können als PB Fluorelastomere wie Kynar 2801® und/oder Dyneon THV 200® verwendet werden. Diese werden z. B. mit einer Lösung aus LM: EC/PC und LS: LiPF₆ mit LSA: MgO und gegebenenfalls Carbonfasern versetzt. Andere Zusammensetzungen der Lösungsmittel, Leitsalze und Leitsalzadditive sind jederzeit möglich. Einzelheiten der Zusammensetzung und die Verfahrenstechnik der Herstellung werden in den Beispielen beschrieben.

Werden intrinsisch leitfähige Polymere wie Polyacetylen, Polypyrrol, Polyanilin oder auch Carbonfasern eingesetzt, so werden diese vorzugsweise mit Leitsalz + Lösungsmittel (LiOB + DMC/DEC) getränkt und dann als Gitter, Netz o.ä. zur Fixierung der Elektrodenmassen verwendet, gegebenenfalls auch in Kombination mit den anderen z. B. oben erwähnten Polymerbindern.

Der Separator S ist eine Zwischenschicht und trennt Anode und Kathode. Der Separator ist bevorzugt eine Folie, Netzgewebe, Vlies, Gewebe o.ä., der neben dem Trenneffekt folgende Aufgaben erfüllen soll:
a) Ausreichende Leitfähigkeit für den Ionentransport der Leitsalz-Komponenten,
b) Reservoir für Leitsalz und Lösungsmittel
c) Flexibilität
d) Schmelzsicherung bei Oberlast e) Keine Versagensmechanismen bei normalem Batteriebetrieb, der definierten Be- und Entladung.

Der Separator kann als separate Zwischenschicht (Fig. 2a) verwendet werden, kann aber auch integrierter Bestandteil der Kathode bzw. Anode sein (Fig. 2b).

### Dreischichtenaufbau

Anode/Separator/Kathode werden mit ihren jeweiligen Ableitern zu einem Verbund laminiert.

Gemäß Fig. 2b können insbesondere die dem Ableiter abgewandten Seiten der Anode bzw. Kathode mit einer Separatorschicht versehen sein, alternativ kann auch nur eine Elektrode (Anode oder Kathode) mit einer Separatorschicht versehen sein.

Der Separator weist bevorzugt organische Polymere (wie z.B. für den Polymerbinder PB vorstehend beschrieben) und gegebenenfalls Leitsalz, Leitsalzadditive und/oder Lösungsmittel auf. Für die erfindungsgemäße Verwendung werden poröse Strukturen bevorzugt. Die Herstellung erfolgt z.B. durch Extrusion, Gießen, Beschichten o.ä..

Ableiter: Sie dienen zur Ableitung des in dem Batteriesystem erzeugten Stromes (zu Plus- bzw. Minus-Pol der Batterie); sie sollen feste Haftung mit den Elektrodenmassen haben und möglichst geringen elektrischen Übergangswiderstand zeigen.

Als Ableiter kommen Carbonfasern, Graphit, Elektrisch leitfähige Polymere und/oder Metalle in Frage, vorzugsweise ist der Kathodenableiter geprimert z. B. mit Ruß/Terpolymeren Dyneon THV.

Die Herstellung der Ableiter erfolgt gemäß herkömmlicher Verfahrenstechnik. Im folgenden werden einige Anoden- bzw. Kathodenmassen mitgeteilt. Einzelheiten sind aus den Beispielen ersichtlich. Die erfindungsgemäßen Systeme dienen als Energiespeicher aber auch als photovoltaische Sensoren und Dioden.

Beispielhafte Ausführungsformen für die Elektrodenmassen sind nachfolgend aufgeführt.

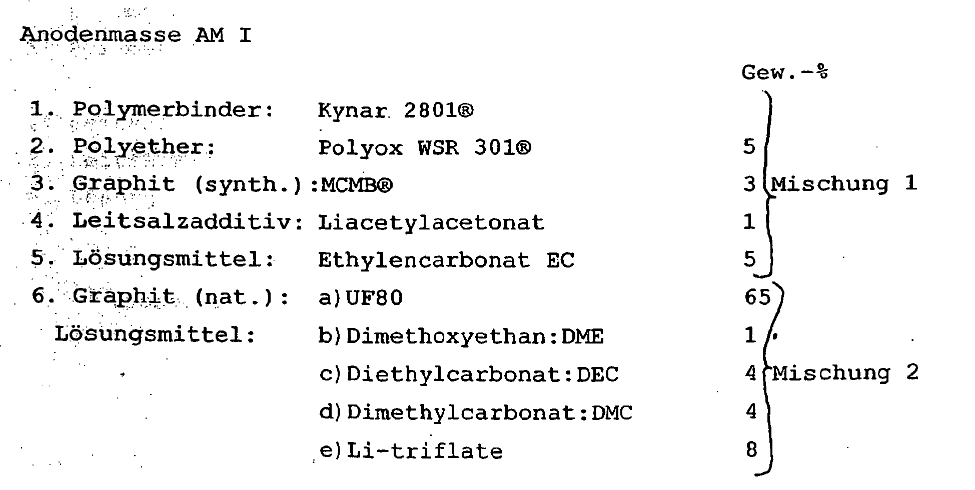

Die Komponenten 1-5 werden bei R.T. intensiv gemischt (2 h) und dann mit der Mischung 2, der unter 6. angeführten Komponenten vermischt (R.T., 1 h).

Die Mischung 2 wird so hergestellt, daß der Graphit vorgelegt wird, mit dem Leitsalz versetzt wird und ca. 30 min bei R.T. gemahlen wird, dann werden nacheinander die oben angeführten Lösungsmittel zugesetzt und weitere 1 - 2h gerührt.

### Anodenmasse AM II

Statt Polyether 2. wird Polyvinylpyrrolidon (Luviskol®) Molmasse 100.000 verwendet.

Die Arbeiten erfolgen unter Argon, die Graphite werden im Vakuum bei 100 °C und 0,1 Torr ausgeheizt.

### Anodenmasse AM III

Als Leitsalzadditiv 4. wird Li-metaborat (LiBO₂) verwendet.

### Anodenmasse AM IV

Als Leitsalz 6. e) wird Li-oxalatoborat LiOB verwendet.

### Anodenmasse AM V

Als Leitsalz 6. e) wird LIPF₆ verwendet.

### Anodenmasse AM VI

Als Graphit 6. a) wird Kropfmühl-Graphit gemahlen GBL® verwendet.

### Anodenmasse AM VII

Wie AM VI aber als Leitsalz 6. e) wird LiPF6 verwendet.

### Anodenmasse AM VIII

Als Polymerbinder 1 wird Dyneon THV200® verwendet.

### Anodenmasse AM IX

Als Leitsalzadditiv 4. wird LiBF₄ verwendet.

### Anodenmasse AM X

Als Lösungsmittel 6. d) wird der Perfluorether (Molmasse≈500) Krytox® verwendet.

### Anodenmasse AM XI

Als Lösungsmittel 6. d) wird der Perfluor(propylvinylether) verwendet.

### Anodenmasse AM XII

Als Lösungsmittel 6. d) wird der Perfluorether FC-75® (3M) verwendet.

### (Perfluorbutyltetrahydrofuran)

Bei allen Anodenmassen liegt die AM I auf Basis vor (wenn nicht auf andere Bezugsmassen verwiesen wurde).

### Kathodenmasse KM I

| | | | | |
|---|---|---|---|---|
| | | | | Gew.-% |
| 1. | Li-Interkalat Metalloxid: | | Co-Oxid | 70 |
| 2. | Polymerbinder: | | Kynar 2801 | 5 |
| 3. | Polymeradditiv | | Polybutadienöl 5-8000 | 5 |
| 4. | Leitsalz: | | Li-triflat | 5 |
| 5. | Leitsalzadditiv: | | Li-acac | 2 |
| 6. | Lösungsmittel: | a) | DME | 1 |
| | | b) | EC | 6 |
| | | c) | DEC | 4 |
| | | d) | DMC | 2 |
| | | | | 100 |

### Die Kathodenmasse KM I

Sie wird hergestellt durch Abmischen von Li-Co-Oxid 1) mit Li-triflat 4) und Li-acac 5) dann wird die Mischung von Polymerbinder 2), Polymeradditiv 3) und den Lösungsmitteln 6.a) - 6.d), die bei Temperaturen von 30 - 80 °C hergestellt wurden, zugefügt und noch intensiv 2 h bei R.T. gemischt.

### Kathodenmasse KM II

Entspricht in der Zusammensetzung KM I, wird jedoch in anderer Reihenfolge gemischt:
Zum Li-Co-Oxid werden 60 Teile des Leitsalz 4) sowie des Lösungsmittels 6.c) zugefügt und bei R. T. 1 h innig vermischt.
Dann wird die Mischung von Li-Co-Oxid (10 Teile), dem Leitsalzadditiv 5), dem Polymerbinder 2), dem Polymeradditiv 3) und die Lösungsmittel 6.a), 6.c), 6.d) zugefügt und bei Raumtemperatur noch 2 h intensiv gemischt.

### Kathodenmasse KM III

Als Li-interkaliertes Metalloxid 1) wird ein Gemisch Li-Ni-Oxid/Li-Co-Oxid (Gewicht 1:1) verwendet.

### Kathodenmasse KM IV

Als Leitsalz 4) wird LiPF₆ verwendet

### Kathodenmasse KM V

Als Polymeradditiv 3) wird Polyvinylpyrrolidon (Luviskol®) verwendet.

### Kathodenmasse KM VI

Als Leitsalz 4) wird Li(trifluoromethylsulfonyl)imid Li [N (SO₂CF₃)₂] verwendet.

### Kathodenmasse KM VII

Als Leitsalz 4) wird Li-oxalatoborat (LiOB) verwendet.

### Kathodenmasse KM VIII

Als Li-interkaliertes Metalloxid 1) wird Spinell Mn-Oxid verwendet, und zwar 65 Gew.-%, das Li-Mn-Oxid wird dann mit 5 Gew.-% Ensaco-Ruß und dem Leitsalz 4) und Leitsalzadditiv 5) Li-acac sowie dem Lösungsmittel 6.b) EC versetzt und 30 min. bei R.T. in einer Kugelmühle gemahlen, anschließend wird die Mischung aus den restlichen Ansatzbestandteilen Polymerbinder 2), Polymeradditiv 3), und den Lösungsmitteln (6.a), 6.c), 6.d) zugefügt und 60 Min bei R. T. (40 V/Min) gemischt.

Allen Ansätzen liegt die Grundmischung KM I, wenn nicht anders angegeben, zugrunde.

### Beispiel 1

Die Anodenmasse AM I - wurde unter Schutzgas (Ar) in einem Collin-Extruder bei Temperaturen von 100 - 105 °C und gleichzeitiger Zudosierung von 8 Teilen von Trifluormethylether (F 5a® Hoechst) extrudiert und über eine Breitschlitzdüse (150 mm breit, 15 - 20 µm dick) ausgetragen und direkt auf eine Cu-Folie (9 µm stark) laminiert (80 °C). Das erhaltene System aus Cu-Ableiter mit Anodenmasse wurde in einem weiteren Schritt zu einem Batterieverbundsystem zusammengeführt (kontinuierlich in einem beheiztem Laminator 80 °C).

### Beispiel 2

Die Kathodenmasse KM I wird (analog der Anodenmasse AM I im Beispiel 1) unter Argon als Schutzgas in einem Collin-Extruder bei 100 -105 °C extrudiert (150 mm breit und 20 - 25 µm dick) und direkt nach dem Austritt aus der Breitschlitzdüse auf eine geprimerte Al-Folie (Dicke: 12 µm, Primerschicht 3 µm) laminiert und mit einer Separatorfolie (Solupren®), die mit einer 1 M Lösung aus LiPF₆ in Monoglykol - bei Tetrafluorethylether (HC₂F₄-O-C₂F₄H) getränkt ist, kombiniert und dann kontinuierlich mit der im Beispiel 1 beschriebenen Anode laminiert.

### Beispiel 3

Das entsprechend (Bsp. 1 - Bsp. 2) hergestellte Verbundsystem wird zu einem Wickel verarbeitet, eingehaust und durch Laserschweißen der Elektrodenableiter zu Plus- bzw. Minus-Pol zu einer gebrauchsfähigen Batterie verarbeitet. Der Durchmesser der Batterie beträgt 8 cm, die Ladung erfolgt galvanostatisch (Digatron-Ladegerät) 1. Stufe bis ca. 3 Volt, dann bis 3,5 und zum Schluß bis 4,1 Volt, jeweils mit 0,15 mA/cm². Die Entladung erfolgt mit 0,15 mA/cm². Die Entladekapazität beträgt 43 Ah, bei einer Aktivfolie von 1,5 m². Die Zyklenstabilität liegt bei > 300, das "Fading" bei nicht mehr, meist unter 2%. Wird statt Solopur®, Celgard® Separator benutzt, so werden gleich gute Ergebnisse erzielt:

**Tabelle 1**

| Beispiel | 4 | 5 | 6 | 7 | 8 | 9 |
|---|---|---|---|---|---|---|
| Anodenmasse AM | II | III | IV | V | VI | VII |
| Kathodenmasse KM | II | III | IV | V | VI | VII |
| Separator S | II | III | IV | V | VI | VII |
| Entladekapazität | 43 | 42 | 44 | 42 | 42 | 43 |
| Zyklenstabilität | >300 | >300 | >300 | >300 | >200 | >300 |
| Fading | ≈2% | ≈1% | ≈1% | ≈1-2% | ≈1% | ≈1 |

Die Verarbeitung erfolgt entsprechend der Beispiele 1 - 3 als Separator wurde benutzt,
Angaben in Klammern sind Gewichtsteile

| | | | | | |
|---|---|---|---|---|---|
| SII | Kynar 2801 (30) | Styroflex (2) | MgO (4) | 1M LiPF₆ in EC/DC | (64) |
| SIII | Dyneon THV 200 (32) | | MgO (8) | 1M LiPF₆ in EC/DC | (60) |
| SIV | Polypropylen (20) | Polyvinylpyrrolidon (10) | MgO (10) | 1M LiPF₆ in EC/DC | (60) |
| SV | Kynar 2801 (30) | Styroflex (2) | Li-acac (8) | 1M LiOB in DME | (60) |
| SVI | Kynar 2801 (30) | Al203(5) | LiOB (5) | 1M Li-triflat in EC/DC | (60) |
| SVII | Kynar 2801 (30) | Styroflex (5) | MgO (5) | 1M LiPF₆ in EC/DC | (60) |

### Vergleichsbeispiele:

Wird nicht unter den erfindungsgemäßen Bedingungen gearbeitet, nämlich:
1.Entgasen der aktiven Massen.
2.Intensives Vermischen und "Reifen" (Anquellen) der LS, LSA unter Schutzgas (Argon).
3.Separates zweistufiges Mischen der Aktiv-Komponenten, so werden Zyklenstabilitäten 50 - 150 erreicht bei einem Fading > 2,5 %.

## Patentansprüche

1. Verfahren zur Herstellung eines Lithium-Polymer-Energiespeichers, der aufweist eine aktive Kathodenmasse, eine aktive Anodenmasse und einen Ableiter
**dadurch gekennzeichnet, dass**
die aktiven Elektrodenmassen mit Leitsalz und gegebenenfalls Leitsalz-Additiv und Lösungsmittel in einer ersten Prozessstufe gemahlen bzw. intensiv gemischt werden, in einer zweiten Prozessstufe mit einem Polymerbinder innig vermischt werden, und dann in einer dritten Prozessstufe extrudiert und separat auf den Ableitermaterial laminiert werden, und die laminierten Elektrodenmassen gegebenenfalls mit laminiertem Separator in Sandwichlage zusammengefügt werden, so dass die aktiven Elektrodenmassen definiertere Strukturen aufweisen.

2. Verfahren nach Anspruch 1,
**dadurch gekennzeichnet, dass**
in der ersten Prozessstufe die Mischung aus aktiven Elektrodenmassen und Leitsalz mit aprotischem Lösungsmittel imprägniert wird.

3. Verfahren nach Anspruch 1 oder 2,
**dadurch gekennzeichnet, dass**
die aktiven Elektrodenmassen vor ihrer Verwendung bei Temperaturen zwischen -20 und 200 °C, vorzugsweise bei 20 bis 150 °C, insbesondere Raumtemperatur bis 100 °C entgast werden.

4. Verfahren nach einem der Ansprüche 1 bis 3,
**dadurch gekennzeichnet, dass**
alle Arbeiten unter Schutzgas vorzugsweise Argon und/oder Perfluoralkylethern durchgeführt werden.

5. Verfahren nach einem der vorhergehenden Ansprüche, **dadurch gekennzeichnet, dass**
die aktive Elektrodenmassen für die Anode aus der Gruppe bestehend aus Li-interkalierbaren synthetischen und/oder natürlichen Graphiten, vorzugsweise solchen mit globularen Strukturen, Graphenen, Polyphenylenen, Polyacetylenen, nano-dimensionierten Carbonfasern, vorzugsweise Fasern mit poröser Struktur oder als Hohlfasern ausgewählt werden.

6. Verfahren nach Anspruch 5,
**dadurch gekennzeichnet, dass**
die aktive Anodenmasse in Mengen von 50 - 85 Gew.-% eingesetzt wird.

7. Verfahren nach einem der vorhergehenden Ansprüche,
**dadurch gekennzeichnet, dass**
die aktive Elektrodenmasse für die Kathode aus der Gruppe bestehend aus Li-interkalierbaren Oxiden von Ti, Zr, V, Cr, Mo, W, Mn, Co, Ni allein oder in Kombination ausgewählt werden, wobei die aus Li-interkalierbaren Oxide vorzugsweise in orientierter Form mit verzerrten Gitterstrukturen vorliegen.

8. Verfahren nach Anspruch 7,
**dadurch gekennzeichnet, dass**
die aktive Kathodenmasse in Mengen von 50 - 85 Gew.-% eingesetzt wird.

9. Verfahren nach einem der vorhergehenden Ansprüche,
**dadurch gekennzeichnet, dass**
das Leitsalz aus der Gruppe bestehend aus Lithiumverbindungen wie Li-Organoborate, LiBF₄, LiClO₄, LiPF₆, Lithiumtrifluormethansulfonat, Lithiumtrifluormetlxylsulfonylimid, -methid, oder -bismethid ausgewählt wird.

10. Verfahren nach Anspruch 9,
**dadurch gekennzeichnet, dass**
das Leitsalz in Mengen von 10 bis 100 Gew.-%, bezogen auf die jeweiligen aktiven Elektrodenmaterialien eingesetzt wird.

11. Verfahren nach einem der vorhergehenden Ansprüche,
**dadurch gekennzeichnet, dass**
das Leitsalzadditiv aus der Gruppe bestehend aus Iminium- und/oder Imidiumsalzen der Leitsalze nach Anspruch 8, Lithiumverbindungen wie Lithiumacetylacetonat, Lithiummetaborat, Lithiumsilikat, einschliesslich natürlich vorkommender Lithiumsilikate, wie Spodumen, Säurefängem und Gerüstsubstanzen wie MgO, BaO, Al₂O₃, SiO₂, sowie Carbonfasern und/oder Kohlenstoffpulver, die vorzugsweise mit Lithiumsalzen getränkt oder ummantelt sind, ausgewählt wird.

12. Verfahren nach Anspruch 11,
**dadurch gekennzeichnet, dass**
das Leitsalzadditiv in Mengen von 0,1 bis 30 Gew.-%, bezogen auf die Menge des Leitsalzes, eingesetzt wird.

13. Verfahren nach einem der vorhergehenden Ansprüche,
**dadurch gekennzeichnet, dass**
das Lösungsmittel zum Lösen oder Dispergieren der Leitsalze bzw. der Leitsalz-Additive und zum Quellen der organischen Polymerbinder aus der Gruppe bestehend aus Alkylcarbonaten, Glykolethern, substituierten und/oder cyclischen Harnstoffen, Fluorethem und Fluoralkylmethacrylsäureestern ausgewählt wird.

14. Verfahren nach Anspruch 13,
**dadurch gekennzeichnet, dass**
als Lösungsmittel Fluorether mit Molmassen bis zu 1500 verwendet werden.

15. Verfahren nach Anspruch 13 oder 14,
**dadurch gekennzeichnet, dass**
das Lösungsmittel in Mengen von 1 bis 100 Gew.-%, bezogen auf das Leitsalz eingesetzt wird.

16. Verfahren nach einem der vorhergehenden Ansprüche,
**dadurch gekennzeichnet, dass**
der Polymerbinder aus der Gruppe bestehend aus Polyolefinen, Polyethylen, Polypyrrolidon, Polybutenen sowie deren Homologen und Copolymeren, Polyvinylethern, Polystyrol und dessen Copolymeren mit Butadien bzw. Isopren, anionisch hergestellten Blockpolymeren, SBR-Kautschuk, Cu-Polybutadienen, Fluorelastomeren, Co- bzw. Terpolymeren auf Basis von Vinylidenfluorid, Hexafluorpropen, Tetrafluorethen, Perfluoralkoxy-Derivaten, Polyalkylenoxiden mit verkappten Endgruppen, cyclischen Ethern, einschliesslich Kronenethern sowie Ethern der Stärke und von Zuckern ausgewählt wird.

17. Verfahren nach Anspruch 16,
**dadurch gekennzeichnet, dass**
der Polymerbinder in Mengen von 5 bis 30 Gew.-%, bezogen auf die jeweiligen aktiven Elektrodenmassen verwendet wird.

18. Verfahren nach einem der vorhergehenden Ansprüche,
**dadurch gekennzeichnet, dass**
als Separator Folien, Netze, Gewebe, und/oder Vliese verwendet werden.

19. Verfahren nach Anspruch 18,
**dadurch gekennzeichnet, dass**
der Separator bei dem Zusammenfügen von Anode und Kathode mit dem Separator mit Leitsalz, Leitsalzadditiv und Lösungsmittel versetzt wird.

20. Verfahren nach Anspruch 18,
**dadurch gekennzeichnet, dass**
der Separator getrennt von den aktiven Elektrodenmassen auf Substratfolie extrudiert wird und zu diesem Zeitpunkt bereits Leitsalz, Leitsalzadditiv und/oder Lösungsmittel enthält.

21. Verfahren nach einem der vorhergehenden Ansprüche,
**dadurch gekennzeichnet, dass**
die Herstellung der Elektrodenmassen stufenweise erfolgt, indem die jeweiligen aktiven Komponenten mit anteiligen Mengen an Leitsalz und/oder Leitsalzadditiv und/oder Lösungsmittel, beispielsweise in einem Wirbelbett oder Ultraschallbad innig vermischt werden.

22. Verfahren nach Anspruch 21,
**dadurch gekennzeichnet, dass**
in einem nachgeschalteten Verfahrensschritt die übrigen Elektrodenkomponenten eingearbeitet werden, vorzugsweise über Kalander oder Extruder.

23. Verfahren nach einem der Ansprüche 16 oder 17,
**dadurch gekennzeichnet, dass**
der Polymerbinder als leitfähiger Compound bzw. Batch mit Zusätzen von leitfähigem Ruß, Carbonfasern, Leitsalzen, und/oder Leitsalz-Additiven und vorzugsweise angequollen mit dem Lösungsmittel eingesetzt werden.

24. Verfahren nach einem der vorhergehenden Ansprüche,
**dadurch gekennzeichnet, dass**
als Ableiter Metallfolien, Kohlenstofffasergewebe, Netze, und/oder Polyacetylenfolien eingesetzt werden.

25. Verfahren nach Anspruch 24,
**dadurch gekennzeichnet, dass**
als Kathodenableiter geprimerte Al-Folie verwendet wird.

26. Verfahren nach einem der vorhergehenden Ansprüche,
**dadurch gekennzeichnet, dass**
die Elektroden mit oder ohne Ableiter mit dem Separator zu einem Verbund laminiert werden, wobei der Separator eine Zwischenschicht bildet, die Anode bzw. Kathode jeweils eine Separatorschicht tragen und der Verbund der Elektroden über die beiden Separatorschichten erfolgt.

27. Verfahren nach einem der vorhergehenden Ansprüche,
**dadurch gekennzeichnet, dass**
das Herstellen des Lithium-Energiespeichers kontinuierlich oder diskontinuierlich erfolgt.

28. Verfahren nach einem der vorhergehenden Ansprüche zur Herstellung einer Li-Polymer-Batterie durch Schichtung und/oder Wickeln mit anschließendem Einhausen und Polen.

29. Verfahren nach einem der vorhergehenden Ansprüche zur Herstellung von elektrophoretischen Systemen, Dioden oder Sensoren.

## Claims

1. Process for producing a lithium polymer energy store which has an active cathode material, an active anode material and an output conductor,
**characterized in that**
the active electrode materials are ground or mixed thoroughly with conductive salt and optionally conductive salt additive and solvent in a first process stage, mixed intimately with a polymer binder in a second process stage, and then extruded and laminated separately onto the output conductor material in a third process stage, and the laminated electrode materials are optionally assembled together with laminated separator in a sandwich layer, such that the active electrode materials have more defined structures.

2. Process according to Claim 1,
**characterized in that**
the mixture of active electrode materials and conductive salt is impregnated with aprotic solvent in the first process stage.

3. Process according to Claim 1 or 2,
**characterized in that**
the active electrode materials, before use thereof, are degassed at temperatures between -20 and 200°C, preferably at 20 to 150°C, especially room temperature to 100°C.

4. Process according to any of Claims 1 to 3,
**characterized in that**
all operations are conducted under protective gas, preferably argon and/or perfluoroalkyl ethers.

5. Process according to any of the preceding claims,
**characterized in that**
the active electrode materials for the anode are selected from the group consisting of Li-intercalatable synthetic and/or natural graphites, preferably those with globular structures, graphenes, polyphenylenes, polyacetylenes, nanosize carbon fibres, preferably fibres with porous structure or in the form of hollow fibres.

6. Process according to Claim 5,
**characterized in that**
the active anode material is used in amounts of 50-85% by weight.

7. Process according to any of the preceding claims,
**characterized in that**
the active electrode material for the cathode is selected from the group consisting of Li-intercalatable oxides of Ti, Zr, V, Cr, Mo, W, Mn, Co, Ni alone or in combination, said Li-intercalatable oxides preferably being present in oriented form with distorted lattice structures.

8. Process according to Claim 7,
**characterized in that**
the active cathode material is used in amounts of 50-85% by weight.

9. Process according to any of the preceding claims,
**characterized in that**
the conductive salt is selected from the group consisting of lithium compounds such as lithium organoborates, LiBF₄, LiClO₄, LiPF₆, lithium trifluoromethanesulphonate, or lithium trifluoromethylsulphonylimide, -methide or -bismethide.

10. Process according to Claim 9,
**characterized in that**
the conductive salt is used in amounts of 10 to 100% by weight, based on the particular active electrode materials.

11. Process according to any of the preceding claims,
**characterized in that**
the conductive salt additive is selected from the group consisting of iminium and/or imidium salts of the conductive salts according to Claim 8, lithium compounds such as lithium acetylacetonate, lithium metaborate, lithium silicate, including naturally occurring lithium silicates such as spodumene, acid scavengers and framework substances such as MgO, BaO, Al₂O₃, SiO₂, and carbon fibres and/or carbon powders which have preferably been impregnated or coated with lithium salts.

12. Process according to Claim 11,
**characterized in that**
the conductive salt additive is used in amounts of 0.1 to 30% by weight, based on the amount of the conductive salt.

13. Process according to any of the preceding claims,
**characterized in that**
the solvent for dissolving or dispersing the conductive salts or the conductive salt additives and for swelling the organic polymer binders is selected from the group consisting of alkyl carbonates, glycol ethers, substituted and/or cyclic ureas, fluoroethers and fluoroalkyl methacrylates.

14. Process according to Claim 13,
**characterized in that**
the solvents used are fluoroethers with molar masses up to 1500.

15. Process according to Claim 13 or 14,
**characterized in that**
the solvent is used in amounts of 1 to 100% by weight, based on the conductive salt.

16. Process according to any of the preceding claims,
**characterized in that**
the polymer binder is selected from the group consisting of polyolefins, polyethylene, polyvinylpyrrolidone, polybutylenes and the homologues and copolymers thereof, polyvinyl ethers, polystyrene and copolymers thereof with butadiene or isoprene, anionically prepared block polymers, SBR rubber, Cu polybutadienes, fluoroelastomers, Co- or terpolymers based on vinylidene fluoride, hexafluoropropene, tetrafluoroethene, perfluoroalkoxy derivatives, polyalkylene oxides with capped end groups, cyclic ethers, including crown ethers and ethers of starch and of sugars.

17. Process according to Claim 16,
**characterized in that**
the polymer binder is used in amounts of 5 to 30% by weight, based on the particular active electrode materials.

18. Process according to any of the preceding claims,
**characterized in that**
the separators used are films, meshes, wovens and/or nonwovens.

19. Process according to Claim 18,
**characterized in that**
the separator, in the assembly of anode and cathode with the separator, is admixed with conductive salt, conductive salt additive and solvent.

20. Process according to Claim 18,
**characterized in that**
the separator is extruded onto substrate film separately from the active electrode materials, and at this time already contains conductive salt, conductive salt additive and/or solvent.

21. Process according to any of the preceding claims,
**characterized in that**
the electrode materials are produced in stages, by intimately mixing the particular active components with proportionate amounts of conductive salt and/or conductive salt additive and/or solvent, for example in a fluidized bed or ultrasound bath.

22. Process according to Claim 21,
**characterized in that**
the remaining electrode components are incorporated in a downstream process step, preferably by means of a calender or extruder.

23. Process according to either of Claims 16 and 17,
**characterized in that**
the polymer binder is used in the form of a conductive compound or batch with additions of conductive black, carbon fibres, conductive salts and/or conductive salt additives, and preferably swollen with the solvent.

24. Process according to any of the preceding claims,
**characterized in that**
the output conductors used are metal foils, carbon fibre wovens, meshes and/or polyacetylene films.

25. Process according to Claim 24,
**characterized in that**
the cathode output conductor used is a primed Al foil.

26. Process according to any of the preceding claims,
**characterized in that**
the electrodes with or without output conductors are laminated with the separator to form an assembly, said separator forming an intermediate layer, the anode and cathode each bearing a separator layer and the electrodes being assembled via the two separator layers.

27. Process according to any of the preceding claims,
**characterized in that**
the lithium energy store is produced continuously or batchwise.

28. Process according to any of the preceding claims for producing an Li polymer battery by layering and/or winding with subsequent encasing and poling.

29. Process according to any of the preceding claims for producing electrophoretic systems, diodes or sensors.

## Revendications

1. Procédé de fabrication d'un accumulateur d'énergie lithium-polymère, présentant une masse de cathode active, une masse d'anode active et un conducteur de sortie,
**caractérisé en ce que**
les masses d'électrode actives sont broyées ou mélangées intensément avec un sel conducteur et, le cas échéant un additif de sel conducteur et un solvant, en une première étape de processus, sont mélangées intiment à un liant polymère en une deuxième étape de processus, et ensuite extrudées en une troisième étape de processus et laminées séparément sur le matériau de conducteur de sortie, et les masses d'électrodes laminées sont le cas échéant assemblées, avec un séparateur laminé, en couche sandwich, de manière que les masses d'électrode actives présentent des structures définies.

2. Procédé selon la revendication 1,
**caractérisé en ce que**,
dans le premier étage de processus, le mélange de masses d'électrode actives et de sel conducteur est imprégné d'un solvant aprotique.

3. Procédé selon la revendication 1 ou 2,
**caractérisé en ce que**,
avant leur utilisation, les masses d'électrode actives sont dégazées à des températures comprise entre -20 et 200°C, de préférence dans la fourchette comprise entre 20 à 150°C, en particulier dans la fourchette comprise entre la température ambiante et 100°C.

4. Procédé selon l'une des revendications 1 à 3,
**caractérisé en ce que**
tous les travaux sont conduits sous atmosphère de gaz protecteur, de préférence d'argon et/ou de perfluoalkyléthers.

5. Procédé selon l'une des revendications précédentes,
**caractérisé en ce que**
les masses d'électrode actives pour l'anode sont sélectionnées dans le groupe composé de graphites synthétique et/ou naturels à possibilité d'intercalation de Li, de préférence ceux ayant des strutures globulaires, des graphènes, polyphénylènes, polyacétylènes, fibres de carbone nano-dimensionnées, de préférence des fibres à structure poreuse ou sous forme de fibres creuses.

6. Procédé selon la revendication 5,
**caractérisé en ce que**
la masse d'anode active est mise en oeuvre en des quantités dans la fourchette comprise entre 50 et 85 % en poids.

7. Procédé selon l'une des revendications précédentes,
**caractérisé en ce que**
la masse d'électrode active pour la cathode est sélectionnée dans le groupe composé d'oxydes, à possibilité d'intercalation de Li, de Ti, Zr, V, Cr, Mo, W, Mn, Co, Ni seuls ou en combinaison, les oxydes, à possibilité d'intercalation de Li, se présentant de préférence sous forme orientée, avec des structures de réseau déformées.

8. Procédé selon la revendication 7,
**caractérisé en ce que**
la masse de cathode active est mise en oeuvre en des quantités dans la fourchette comprise entre 50 et 85 % en poids.

9. Procédé selon l'une des revendications précédentes,
**caractérisé en ce que**
le sel conducteur est sélectionné dans le groupe composé de composés lithium, tels qu'organoborates de Li, LiBF4, LiClO4, LiPF6, trifluorométhanesulfonate de lithium, trifluorométhylsulfonyl-imide, -méthide ou -bisméthide de lithium.

10. Procédé selon la revendication 9,
**caractérisé en ce que**
le sel conducteur est mis en oeuvre en des quantités dans la fourchette comprise entre 10 et 100 % en poids, rapporté aux matériaux d'électrode actifs respectifs.

11. Procédé selon l'une des revendications précédentes,
**caractérisé en ce que**
l'additif de sel conducteur est sélectionné dans le groupe composé de sels d'iminium et/ou d'imidium des sels conducteurs selon la revendication 8, de composés lithium tels qu'acétylacétonate de lithium, métaborate de lithium, silicate de lithium, y compris les silicates de lithium d'origine naturelle, tels que les spodumènes, les pièges à acidité et des substances de base, telles que MgO, BaO, Al₂O₃, SiO₂, ainsi que des fibres de carbone et/ou de la poudre de carbone, de préférence imbibée ou enrobée avec des sels de lithium.

12. Procédé selon la revendication 11,
**caractérisé en ce que**
l'additif de sel conducteur est mis en oeuvre en des quantités dans la fourchette comprise entre 0,1 et 30 % en poids, en se référent à la quantité du sel conducteur.

13. Procédé selon l'une des revendications précédentes,
**caractérisé en ce que**
le solvant pour dissoudre ou disperser les sels conducteurs ou les additifs de sel conducteur et pour le gonflement des liants polymère organiques sont sélectionnés dans le groupe composé des alkylcarbonates, glycoléthers, carbamides substitués et/ou cycliques, fluoréthers et esters d'acide fluoroalkyl méthacrylique.

14. Procédé selon la revendication 13,
**caractérisé en ce que**
l'on utilise comme solvant du fluoréther ayant des masses molaires allant jusqu'à 1500.

15. Procédé selon la revendication 13 ou 14,
**caractérisé en ce que**
le solvant est utilisé en des quantités dans la fourchette comprise entre 1 et 100 % en poids, en se référant au sel conducteur.

16. Procédé selon l'une des revendications précédentes,
**caractérisé en ce que**
le liant polymère est sélectionné dans le groupe composé de polyoléfines, polyéthylène, polypyrrolidone, polybutènes, ainsi que leurs homologues et copolymères, polyvinyléthers, polystyrène et ses copolymères avec le butadiène ou l'isoprène, des polymères à blocs fabriqués de manière anionique, un caoutchouc SBR, des polybutadiènes Cu, des fluoroélastomères, co- ou terpolymères à base de fluorure
de vinylidène, hexafluoropropène, tétrafluoroéthène, dérivés perfluoralkoky, oxydes de polyalkylène avec des groupes terminaux encapsulés, des éthers cycliques, y compris des éthers-couronne, ainsi que des éthers de l'amidon et de sucres.

17. Procédé selon la revendication 16,
**caractérisé en ce que**
le lian polymère est mis en oeuvre en des quantités dans la fourchette comprise entre 5 et 30 % en poids, en se référant aux masses d'électrode actives respectives.

18. Procédé selon l'une des revendications précédentes,
**caractérisé en ce qu'**
utilise comme séparateur des feuilles, filets, tissu et/ou nappes non tissées.

19. Procédé selon la revendication 18,
**caractérisé en ce que**,
lors de l'assemblage de l'anode avec la cathode avec le séparateur, le séparateur est mélangé à un sel conducteur, un additif de sel conducteur et un solvant.

20. Procédé selon la revendication 18,
**caractérisé en ce que**
le séparateur est extrudé sur une feuille de substrat, séparément des masses d'électrode actives, et contient déjà à ce moment un sel conducteur, un additif de sel conducteur et/ou un solvant.

21. Procédé selon l'une des revendications précédentes,
**caractérisé en ce que**
la fabrication des masses d'électrodes s'effectue par étapes, **en ce que** les composants actifs respectifs sont mélangés intimement à des quantités, proportionnées, de sel conducteur et/ou additif de sel conducteur et/ou solvant, par exemple dans un lit fluidisé ou un bain à ultra-sons.

22. Procédé selon la revendication 21,
**caractérisé en ce que**,
en une étape de procédé subséquente, les autres composants d'électrode sont intégrés, par exemple sur une calandre ou une extrudeuse.

23. Procédé selon l'une des revendications 16 ou 17,
**caractérisé en ce que**
le liant polymère est mis en oeuvre sous forme de composé conducteur, ou de charge avec des additifs de suie conductrice, fibres de carbone, sels conducteurs et/ou additifs de sel conducteur et, de préférence, gonflés avec le solvant.

24. Procédé selon l'une des revendications précédentes,
**caractérisé en ce qu'**
n utilise comme conducteur de sortie des feuilles métalliques, tissus de fibre de carbone, filets, et/ou feuilles de polyacétylène.

25. Procédé selon la revendication 24,
**caractérisé en ce qu'**
on utilise comme conducteur de sortie de cathode une feuille d'Al revêtue d'un revêtement d'accrochage.

26. Procédé selon l'une des revendications précédentes,
**caractérisé en ce que**
les électrodes, avec ou sans conducteur de sortie, sont laminées avec le séparateur pour former un composite, le séparateur formant une couche intermédiaire, l'anode ou la cathode portant chaque fois une couche de séparateur et le composite des électrodes s'obtenant sur les deux couches de séparateur.

27. Procédé selon l'une des revendications précédentes,
**caractérisé en ce que**
la fabrication de l'accumulateur d'énergie au lithium s'effectue de manière continue ou discontinue.

28. Procédé selon l'une des revendications précédentes, pour la fabrication d'une batterie Li-polymère par application stratifiée et/ou enroulement, avec insertion et polarisation subséquentes.

29. Procédé selon l'une des revendications précédentes, pour la fabrication de systèmes électrophorétiques, diodes ou capteurs.
